# FASCICULE DE BREVET EUROPEEN

(11) **EP 0 313 441 B1**
(45) Date de publication et mention de la délivrance du brevet: **26.05.1993**
(21) Numéro de dépôt: 88402595.8
(22) Date de dépôt: 13.10.1988
(51) Int. Cl.: C11B 1/10, C11B 9/02, B01D 11/02, A23F 5/48

(54) **Mécanisme de chargement-déchargement d'une enceinte fermée utilisable comme cuve d'extraction d'une unité d'extraction en continu de végétaux et procédé d'extraction en comportant application**
Vorrichtung zum Entleeren und Befüllen eines als Extraktionsgefäss für eine Durchlaufextraktionseinheit für Pflanzenmaterial benutzbaren geschlossenen Gefässes und dasselbe verwendendes Verfahren
Device for unloading-loading a closed vessel for use as an extraction tank for a continuously operating extraction unit for vegetable materials, and process using it

(30) Priorité: 19.10.1987 FR 8714353; 19.10.1987 FR 8714354
(43) Date de publication de la demande: 26.04.1989
(73) Titulaire: BIOLANDES AGRO, F-40420 Labrit (FR)
(72) Inventeur: Coutière, Dominique, F-40420 Labrit (FR)
(74) Mandataire: Rinuy, Santarelli

(56) Documents cités:
- DE-A- 1 805 426
- FR-A- 2 435 521
- GB-A- 176 104
- US-A- 2 203 666
- US-A- 2 752 377
- US-A- 2 990 255
- PARFUMS, COSMETIQUES, AROMES, no. 73, février-mars 1987, pages 63-66, Paris, FR; "Biolandes unité d'hydro-distillation en continu"

## Description

L'invention se rapporte aux unités d'extraction en continu de végétaux, et concerne plus précisément un mécanisme de chargement-déchargement de l'enceinte fermée qui constitue la cuve d'extraction, et le procédé d'extraction en comportant application.

On sait que le traitement des matières végétales en vue d'en extraire les huiles essentielles s'effectue principalement à l'aide de solvants ou par entraînement à la vapeur. Dans les deux cas, l'introduction de solvant ou de vapeur s'effectue dans la cuve fermée, généralement à la partie inférieure, le produit chargé d'huile étant récupéré à la partie supérieure. Cette cuve est, bien évidemment, alimentée convenablement en matière première avant le cycle d'extraction , et ensuite déchargée de son végétal épuisé.

On connaît différents types d'alambic ou d'extracteurs pour l'extraction de ces produits végétaux. Parmi les plus anciens et les plus répandus, on trouve la cuve simple, dont le fond est muni d'une grille destinée à recevoir la matière première, cuve qui est fermée par un couvercle pivotant. Ces appareils statiques sont chargés puis déchargés par le haut, le déchargement étant assuré à l'aide de palans qui soulèvent la grille pour enlever de la cuve le bloc que constitue le végétal épuisé. Ces opérations sont évidemment longues, elles nécessitent du personnel, et introduisent une discontinuité de l'extraction. préjudiciable au produit obtenu. Par ailleurs la matière première chargée par le haut se tasse de façon irrégulière dans la cuve, et ce manque d'homogénéité favorise le passage des solvants ou de la vapeur par des chemins préférentiels dans le produit compressé, entraînant une mauvaise extraction qui doit être compensée par un temps d'extraction. plus long au détriment des prix de revient. On connait aussi des extracteurs mobiles, utilisés notamment dans l'industrie des parfums, qui mettent en oeuvre des roues ou tambours tournants, munis de paniers ou d'alvéoles remplis du produit à traiter, qui selon leur position sont chargés, déchargés ou traités, à des postes particuliers.

Dans ces appareils connus, les procédés d'extraction de végétaux qui consistent à extraire les huiles essentielles par entraînement à la vapeur ou au solvant, sont actuellement mis en oeuvre en discontinu, l'alambic étant chargé périodiquement en végétaux frais après déchargement de la charge épuisée.

Les cuves d'extraction ainsi connues ne donnant pas satisfaction, notamment par suite des difficultés rencontrées à les charger et à les décharger périodiquement, la demanderesse a imaginé d'associer à la cuve en question un mécanisme de chargement et de déchargement automatisé, qui évite les inconvénients précités.

De plus puisque les procédés existants ne permettent qu'une récupération partielle de l'énergie fournie et puisque leur déroulement nécessite une main d'oeuvre importante ainsi que des temps de traitement conséquents, la demanderesse a cherché à éviter aussi ces inconvénients en assurant la rentabilité la meilleure possible grâce à un schéma opératoire permettant :
- de traiter de grandes quantités de végétal en un temps relativement bref,
- de diminuer les coûts de main d'oeuvre liés aux manipulations excessives,
- d'assurer l'autonomie énergétique de l'ensemble, et
- de valoriser les résidus d'extraction.
Elle a ainsi mis au point aussi un procédé dans lequel le chargement et le déchargement du végétal se font en continu ce qui en permet l'automatisation et donc une importante économie de main d'oeuvre ainsi qu'une très bonne reproductibilité.
C'est par conséquent un objet essentiel de la présente invention que de proposer un mécanisme de chargement-déchargement d'une enceinte fermée utilisable comme cuve d'extraction d'une unité fonctionnant en continu, cuve dans laquelle les produits solides à traiter sont chargés par le haut et déchargés par le bas après traitement par un fluide et dont le système d'évacuation permet de former un bouchon de produit au niveau du déchargement, mécanisme selon lequel le dispositif de chargement comporte également un moyen complémentaire destiné à comprimer le produit à traiter pour former un bouchon avant son introduction dans l'enceinte de traitement, moyen complémentaire qui consiste en une vis sans fin associée à une autre vis sans fin dont l'axe est perpendiculaire à la première vis, les bouchons formés par le produit comprimé tant au niveau du dispositif de chargement qu'au niveau du dispositif de déchargement présentant une étanchéité suffisante pour maintenir à l'intérieur de ladite enceinte des fluides de traitement liquides ou gazeux.

Selon l'invention un système de soutirage du produit traité situé dans le bas de l'enceinte permet de comprimer ledit produit traité et le dispositif de déchargement comporte au moins un moyen d'émiettage du produit comprimé.

Egalement selon l'invention, le moyen complémentaire du dispositif de chargement permet également l'émiettage du bouchon.
Avantageusement le moyen complémentaire pour comprimer le produit à traiter en amont de l'enceinte est constitué d'une autre vis sans fin montée sur un arbre tournant à axe vertical, vis qui traverse l'orifice d'admission de produit dans la cuve et qui est logée dans un boitier dans lequel débouche le tube contenant la vis sans fin d'alimentation. En outre l'arbre déborde à l'intérieur de la cuve et porte à son extrémité des pales horizontales. Avantageusement la vis s'étend de l'intérieur du tube jusqu'à une certaine distance du filet de la vis verticale, le bouchon de produit comprimé occupant ledit tube sur cette distance.

Selon l'invention également, le système de soutirage comprend un tapis de vis sans fin parallèles récupérant le produit traité et l'amenant à une vis collectrice d'évacuation, ledit tapis de vis étant constitué de vis présentant un profil légèrement conique dont l'évasement est ouvert en direction de la vis collectrice d'évacuation, le profil conique des vis du tapis étant par example obtenu par association d'un noyau axial cylindrique et d'une aile de largeur croissante.

L'invention prévoit aussi que les vis du tapis tournent au-dessus d'auges de récupération qui forment le fond de l'enceinte et qui sont séparées les unes des autres par des bordures de section triangulaire dont les axes sont parallèles aux axes des vis du tapis et dont la pointe est orientée vers le haut; un groupe de vis situé d'un côté du plan médian et un groupe de vis situé de l'autre côté étant à pas inversés et étant l'un et l'autre entraîinés en sens inverse et à même vitesse.

L'invention prévoit également qu'en contrebas des auges de récupération est prévu un tube horizontal d'évacuation transversal aux vis, formant une goulotte ouverte sur la largeur du socle de la cuve qui se prolonge à l'extérieur jusqu'à une chambre de décompression ouverte vers le bas, ledit tube renfermant un moyen mécanique de déplacement des produits traités recueillis vers la chambre, avantageusement constitué d'une vis sans fin, montée sur un arbre tournant à axe horizontal et qui se trouve dans le tube horizontal.

Toujours selon l'invention le moyen complémentaire prévu dans le dispositif de déchargement, pour comprimer le produit traité en aval de la cuve est constitué d'un volet, rappelé contre le tube horizontal d'évacuation à son embouchure dans la chambre de décompression, la vis sans fin s'étendant dans le tube jusqu'à une certaine distance du volet pour que le bouchon de produit occupe ledit tube sur cette distance.

Avant son entrée dans la cuve on réduit si nécessaire le végétal à une taille de brins comprise entre 2 et 5 cm par broyage.

Le fonctionnement en continu du procédé permet de traiter le végétal immédiatement après son broyage, ce qui évite les fermentations qui se déclenchent assez rapidement, altérant et modifiant la composition des essences.

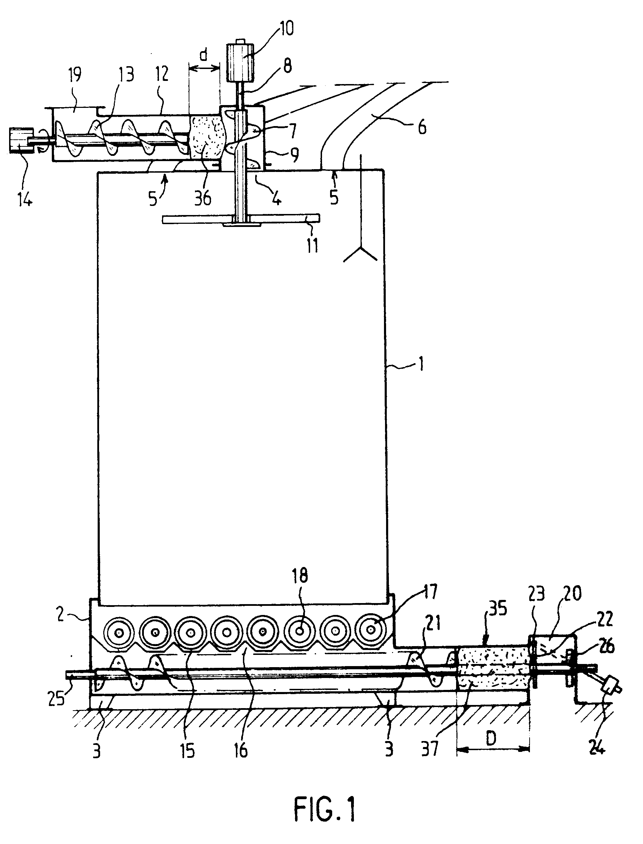

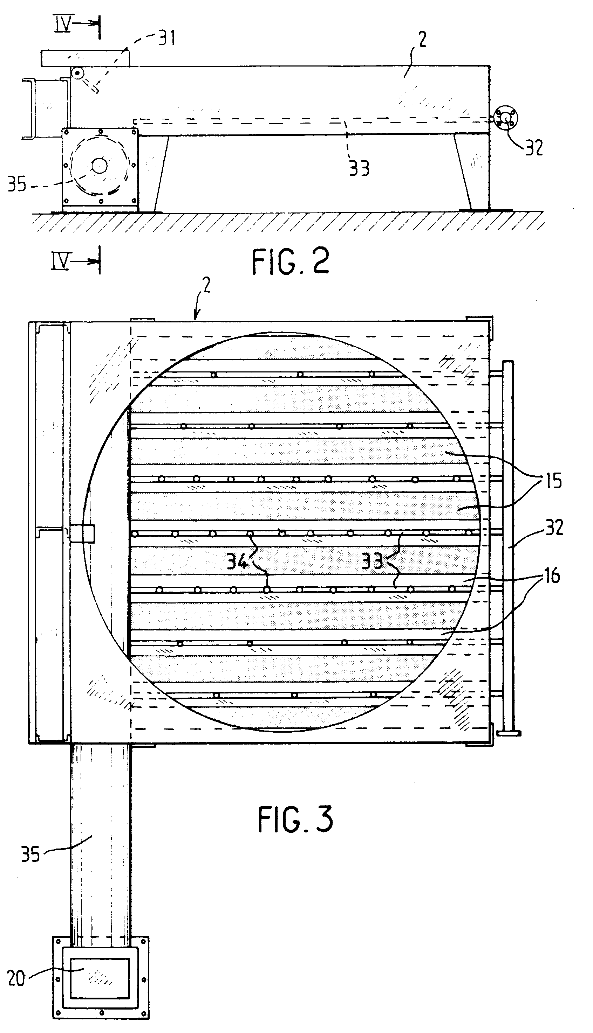

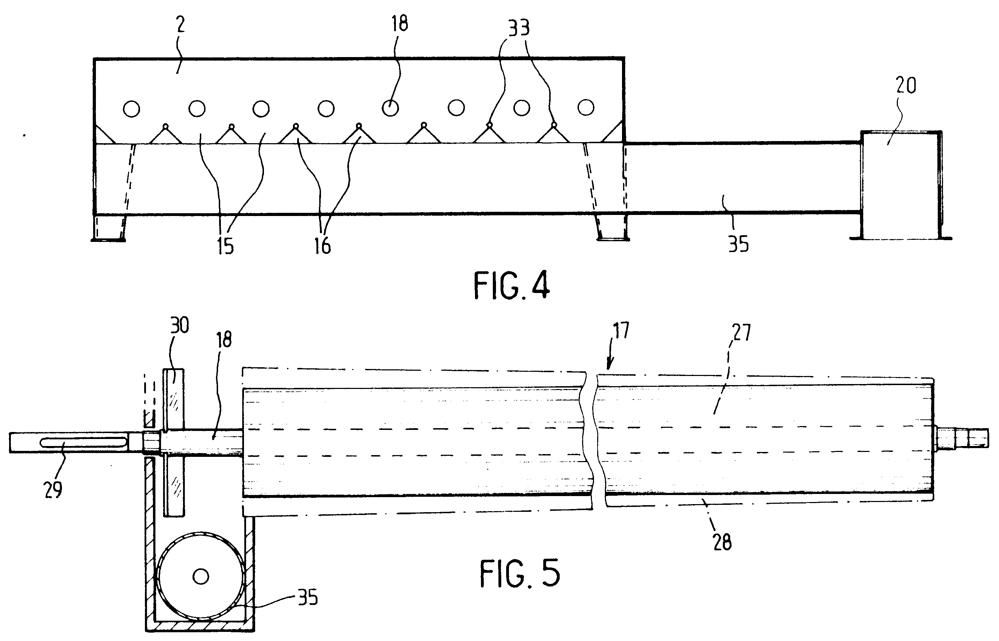

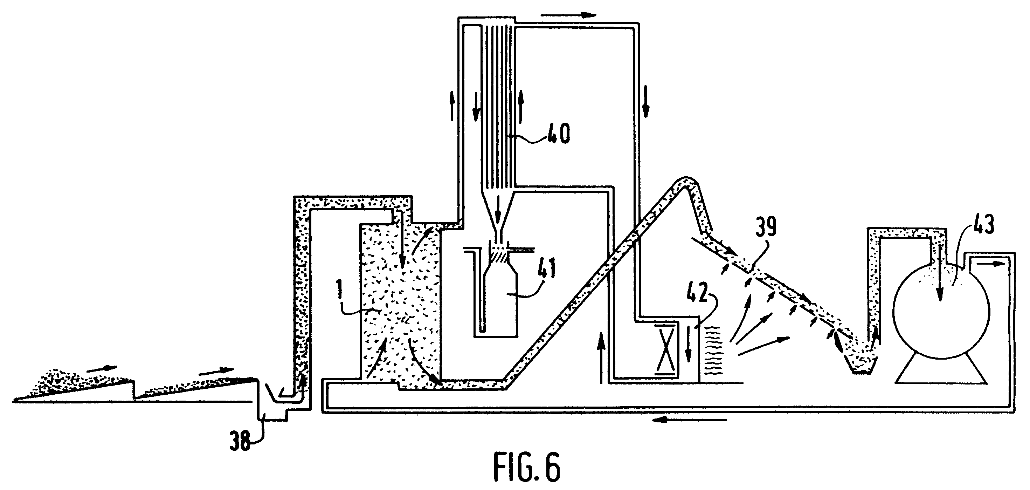

D'autres caractéristiques particulières et avantages de l'invention seront perçus à la lecture de la description suivante faite en référence aux dessins annexés qui montrent un exemple non limitatif de réalisation, dessins dans lesquels la figure 1 représente une vue schématique en coupe d'une cuve d'extraction munie du mécanisme de chargement-déchargement, la figure 2 une vue en élévation du socle de la cuve et la figure 3 une vue de dessus du socle, la figure 4 une vue en coupe selon IV-IV de la figure 2, la figure 5, une vue en élévation, à plus grande échelle d'une vis du tapis de déchargement, et la figure 6 le schéma d'ensemble du procédé.

On voit à la figure 1 une cuve d'alambic 1 qui se présente comme un réservoir cylindrique reposant sur un socle 2 formant un boîtier carré lui-même soutenu par des pieds 3. A la partie supérieure la cuve fermée est munie d'un orifice central 4 et d'orifices de sortie 5 pour la vapeur chargée d'huiles, évacuée par les conduits 6. L'orifice 4 qui sert au chargement de la cuve en matière première est traversé par une vis sans fin 7 montée sur un arbre tournant 8 à axe vertical qui déborde à l'intérieur de la cuve, vis qui s'étend sur toute la hauteur d'un boîtier d'admission rectangulaire 9 un peu plus large que la largeur de la vis. Un moteur 10 monté en bout d'arbre à l'extérieur du boîtier 9 entraîne l'arbre 8 en rotation, ainsi que des pales horizontales 11 fixées à son extrémité inférieure.

Sur le boîtier 9 débouche latéralement un tube horizontal 12 renfermant une vis d'alimentation 13 entraînée par un moteur 14. L'extrémité du tube horizontal 12 porte une ouverture d'admission 19 pour la matière première provenant d'une unité de broyage. La vis 13 s'étend de l'extrémité du tube 12, du côté de l'ouverture 19, jusqu'à une certaine distance d du filet de la vis verticale 7.

A la partie inférieure de la cuve 1, comme on le voit également aux figures 2 à 4, le boîtier constituant le socle 2 est muni d'un fond formé d'une série d'auges de récupération 15 séparées les unes des autres par des bordures 16 de section triangulaire dont la pointe est orientée vers le haut. Auges et bordures sont parallèles et s'étendent sur presque toute la largeur du socle. Au dessus de ce fond est montée une série de vis sans fin 17, à axe horizontal formant un tapis, vis dont les arbres 18 prennent appui sur deux bords opposés du socle 2. Les vis sont disposées pour occuper chacune des auges de récupération 15, les bordures 16 se trouvant entre chaque vis, limitant ainsi les points possibles d'accumulation de matière sur le fond. La réalisation du dispositif de soutirage selon la figure 1 montre huit vis; les quatre vis d'un côté d'un plan médian et les quatre vis de l'autre sont à pas inversés et tournent en sens inverse.
Chaque groupe de quatre est entraîné à même vitesse par un moteur et par l'intermédiaire de poulies et de chaînes de renvoi appropriés, non représentés.

Un côté du socle 2 est pourvu, en contrebas des auges de récupération 15, d'un tube horizontal d'évacuation 35 formant une goulotte ouverte vers le haut sur toute la largeur du socle, mais qui déborde à l'extérieur du socle et débouche dans une chambre de décompression 20, de dimension un peu plus importante que le tube, chambre qui est ouverte vers le bas. Le tube 35 sert de logement à une autre vis sans fin 21 montée sur un arbre 25 qui s'étend donc transversalement aux vis 17 du tapis, et qui s'étend sur toute la largeur du socle et au delà, jusqu'à une distance D de la chambre 20. La vis est entraînée par un moteur approprié non représenté, dans le sens voulu pour déplacer les produits recueillis vers l'extérieur de la cuve, en direction de la chambre 20. L'arbre 25 de la vis porte, à son extrémité, dans la chambre 20 des pales 26. Enfin un volet 22 monté pivotant autour d'un axe horizontal 23 ferme l'arrivée du tube 35 dans la chambre 20. Il est solidaire d'un contre poids 24 qui le maintient normalement appliqué contre le tube. D'autre part on notera en se référant plus précisément à la figure 2 qu'un contacteur 31 est disposé le long de la bordure supérieure de la goulotte, du côté opposé aux vis; il est raccordé au mécanisme moteur des vis et joue le rôle de contact antibourrage.

On notera aussi que les auges transversales de récupération 15 ainsi que les vis 17 placées juste au dessus, s'arrêtent au niveau du tube d'évacuation 35. La figure 5 montre plus en détail le profil d'une de ces vis 17. Sur l'arbre 18 de la vis 17 est prévue l'âme cylindrique 27 et l'aile de vis 28 dont le profil est légèrement conique, l'aile ayant une faible épaisseur d'un côté et une plus forte épaisseur de l'autre, du côté du tube d'évacuation 35. De ce côté l'arbre 18 franchit le tube 35, prend appui sur le bord du socle, et se termine par une clavette 29 servant à son entraînement par une poulie non représentée. En limite du bord du socle l'arbre 18 porte deux pales d'émiettage 30.

La vapeur injectée à la base du réservoir est admise par un tube collecteur 32 placé sur un côté du socle 2, et distribuée à l'intérieur dudit réservoir par des rampes 33 localisées au sommet de chaque bordure 16 de section triangulaire et munies d'une pluralité d'orifices 34 orientés vers le haut. Les orifices 34 sont avantageusement répartis en quinconce d'une rampe à l'autre, et présentent des espacements plus ou moins grands selon que la rampe est en bordure de cuve ou vers son centre.

Le chargement-déchargement de l'alambic ainsi décrit fonctionne de la façon suivante.

La matière végétale à traiter est reçue en continu par l'ouverture 19 à l'entrée du tube 12 où elle est déplacée par la vis 13 entraînée par le moteur 14. L'autre moteur 10 étant arrêté, la vis verticale 7 est immobilisée et s'oppose alors au passage de la matière par l'orifice central 4. La vis d'alimentation 13 continuant son mouvement de rotation à sa sortie il y a un bourrage de matière contre la vis 7 qui finit par former un bouchon 36 dans l'espace du bouchon comprimé et étanche à la vapeur. Dès que la vis verticale 7 se remet en fonctionnement elle casse le bouchon 36 au fur et à mesure de son avancement émiette la matière comprimée qui alimente la cuve. Les pales Il ont pour objet d'égaliser le sommet du tas qui viendrait à se former sous l'orifice central 4.

La matière ainsi contenue dans la cuve 1 est traversée à contre-courant par la vapeur émise par les orifices 34 des rampes 33. Pour réaliser la fonction de déchargement de la cuve, l'ensemble des vis 17 tournent en sens inverse sur chaque moitié du tapis. Les pas étant inversés le végétal épuisé est prélevé du tas de façon très régulière sur toute la surface de la cuve. La forme profilée de chaque vis assure un transfert continu et homogène de végétal épuisé, en débitant la matière, le tas descendant au fur et à mesure sur le tapis sans qu'en aucun endroit ne se produise de failles d'évacuation et sans créer par conséquent de chemins préférentiels pour la vapeur qui traverse donc de façon homogène et régulière toute la matière du tas. Grâce au profil particulier du fond de la cuve formé d'une alternance d'auges 15 et de bordure 16, la totalité du végétal épuisé est reprise par les vis bien intégrées dans ce profil, aucune accumulation permanente n'étant possible sur ce fond.

Le végétal épuisé déjà un peu tassé lors de ce transfert grâce au profil conique des vis 17 tombe alors dans la goulotte puis il est acheminé par la vis 21 dans le tube 35 en direction de la chambre de décompression 20. Au cas où le végétal épuisé ainsi déplacé en plaques ne tomberait pas de lui-même, il serait soumis alors aux pales d'émiettage 30 qui faciliteraient sa chute. Si un bourrage se produisait pour quelque raison que ce soit, le contact 31 pourrait alors agir comme contact de sécurité et arrêter momentanément la marche du tapis de vis. Le végétal épuisé s'accumule alors dans le tube 35 sur la distance D où il est comprime contre le volet 22 formant butée, et forme un bouchon 37 également étanche à la vapeur. Dès que la pression exercée sur le volet 22 est suffisante pour vaincre la force de fermeture due au contrepoids 24, le volet pivote autour de l'axe 23 et le végétal épuisé tassé peut pénétrer dans la chambre de décompression 20. Là il tombe de lui-même vers l'orifice inférieur, et si un bloc atteint la paroi opposée de la chambre, les pales 26 le désagrègent.

Il ya donc en partie haute, comme en partie basse de l'alambic formation d'un bouchon étanche de matière 36 et 37 qui s'oppose à l'échappement de la vapeur. Cette dernière émise par les orifices 34 est donc contrainte de traverser de bas en haut, de façon régulièrement répartie, la matière contenue dans la cuve. Puis le mélange vapeur-huile récupéré au sommet de la cuve est recueilli par les conduits 6, sans pouvoir s'échapper par le tube 12 du fait du bouchon 36. On peut évidemment régler le bourrage de matière au niveau des bouchons en jouant par exemple Sur les phases de fonctionnement de la vis verticale 7 ou de la tare du contre-poids 24, ou encore en modifiant les distances d et D en utilisant des jeux de vis de longueurs différentes.

## Revendications

1. Mécanisme de chargement-déchargement d'une enceinte fermée utilisable comme cuve d'extraction d'une unité fonctionnant en continu dans laquelle les produits solides à traiter sont chargés par le haut et déchargés par le bas après traitement par un fluide et dont le système d'évacuation permet de former un bouchon de produit au niveau du déchargement, caractérisé en ce que le dispositif de chargement comporte également un moyen complémentaire destiné à comprimer le produit à traiter pour former un bouchon avant son introduction dans l'enceinte de traitement (1), moyen complémentaire qui consiste en une vis sans fin (13) associée à une autre vis sans fin (7) dont l'axe est perpendiculaire à la première vis, les bouchons formés par le produit comprimé tant au niveau du dispositif de chargement qu'au niveau du dispositif de déchargement présentant une étanchéité suffisante pour maintenir à l'intérieur de ladite enceinte des fluides de traitement liquides ou gazeux.

2. Mécanisme de chargement-déchargement selon la revendication 1, dans lequel la vis sans fin (13) est horizontale, caractérisé en ce que l'autre vis sans fin (7) montée sur un arbre tournant (8) à axe vertical, traverse l'orifice (4) d'admission de produit dans la cuve et est logée dans un boîtier (9) dans lequel débouche le tube (12) contenant la vis sans fin (13).

3. Mécanisme de chargement-déchargement selon la revendication 2, caractérisé en ce que la vis sans fin (13) s'étend à l'intérieur du tube (12) jusqu'à une certaine distance d du filet de la vis verticale (7), le bouchon (36) de produit comprimé occupant ledit tube sur cette distance.

4. Mécanisme de chargement-déchargement selon la revendication 1, dont le dispositif de déchargement comprend un tapis de vis sans fins parallèles soutirant le produit traité et l'amenant à une vis collectrice d'évacuation, caractérisé en ce que ledit tapis de vis est constitué de vis (17) présentant un profil légèrement conique dont l'évasement est ouvert en direction d'une vis collectrice d'évacuation (21).

5. Mécanisme de chargement-déchargement selon la revendication 4, caractérisé en ce que le profil conique des vis (17) du tapis est obtenu par association d'un noyau axial cylindrique et d'une aile de largeur croissante.

6. Mécanisme de chargement-déchargement selon la revendication 4, caractérisé en ce que les vis (17) du tapis tournent au-dessus d'auges de récupération (15) qui forment le fond de l'enceinte et qui sont séparées les unes des autres par des bordures (16) de section triangulaire dont les axes sont parallèles aux axes des vis (17) du tapis et dont la pointe est orientée vers le haut.

7. Mécanisme de chargement-déchargement selon la revendication 4, caractérisé en ce qu'un groupe de vis (17) situé d'un côté du plan médian et un groupe de vis situé de l'autre côté sont à pas inversés et sont l'un et l'autre entraînés en sens inverse et à même vitesse.

8. Mécanisme de chargement-déchargement selon les revendications 4 et 6, dans lequel en contrebas des auges de récupération est prévu un tube horizontal d'évacuation, transversal aux vis, formant une goulotte ouverte sur la largeur du socle de sa cuve, caractérisé en ce que le tube d'évacuation (35) se prolonge à l'extérieur jusqu'à une chambre de décompression (20), ouverte vers le bas, et, en ce que ledit tube renferme la vis collectrice sans fin (21) pour l'évacuation du produit traité soutiré vers la chambre, vis qui s'étend sur toute la largeur du socle et au-delà jusqu'une distance D de la chambre de décompression.

9. Mécanisme de chargement-déchargement selon la revendication 4, caractérisé en ce que le dispositif de déchargement comprend à la sortie de la vis collectrice (21), pour comprimer le produit traité évacué, un volet (22) rappelé par un contre-poids (24) contre le tube horizontal d'évacuation (35) à son embouchure dans la chambre de décompression (20).

10. Mécanisme de chargement-déchargement selon la revendication 8, caractérisé en ce que l'arbre (25) de la vis (21) porte des pales (26) à son extrémité, dans la chambre de décompression (20).

11. Mécanisme de chargement-déchargement selon les revendications 4 et 8, caractérisé en ce qu'un contacteur anti-bourrage (31) est prévu au-dessus du tube horizontal d'évacuation (35) du côté opposé aux vis de soutirage (17).

12. Mécanisme de chargement-déchargement selon les revendications 4 et 8, caractérisé en ce que chaque arbre (18) de vis (17) porte à son extrémité au-dessus du tube horizontal d'évacuation (35), des pales d'émiettage (30).

13. Mécanisme de chargement-déchargement selon la revendication 6, caractérisé en ce que le fluide de traitement est distribué par des rampes (33) localisées au sommet de chaque bordure (16) de section triangulaire et munies d'une pluralité d'orifices (34) orientées vers le haut.

14. Mécanisme de chargement-déchargement selon la revendication 13, caractérisé en ce que les orifices (34) sont répartis en quinconce, d'une rampe à l'autre, et irrégulièrement espacés selon les rampes.

## Claims

1. A loading-unloading mechanism for an enclosed space which can be used as an extraction tank in a continuously operating unit, in which the solid products to be treated are loaded from above and unloaded at the bottom after having been treated by a fluid and the evacuation system of which enables a plug of product to be formed at the unloading level,
**characterised in that** the loading device also comprises complementary means intended to compress the product to be treated to form a plug before its introduction into the treatment chamber (1), said complementary means consisting of a worm (13) associated with another worm (7), the axis of which is perpendicular to the first worm, the plugs formed by the compressed product both at the level of the loading device and at the level of the unloading device being sufficiently impervious to keep liquid or gaseous treatment fluids inside said chamber.

2. A loading-unloading mechanism according to Claim 1, in which the worm (13) is horizontal,
**characterised in that** the other worm (7), mounted on a rotating shaft (8) having a vertical axis, passes through the product inlet (4) into the tank and is accommodated in a housing (9) into which the pipe (12) containing the worm (13) opens.

3. A loading-unloading mechanism according to Claim 2,
**characterised in that** the worm (13) extends inside the pipe (12) until it is a certain distance d from the thread of the vertical worm (7), the plug (36) of compressed product occupying said pipe over this distance.

4. A loading-unloading mechanism according to Claim 1, in which the unloading device comprises a conveyor of parallel worms extracting the treated product and conveying it to a collector worm for evacuation,
**characterised in that** said worm conveyor is formed by worms (17) having a slightly conical profile, the flared part of which is open towards a collecting worm for evacuation (21).

5. A loading-unloading mechanism according to Claim 4,
**characterised in that** the conical profile of the worms (17) of the conveyor is obtained by associating a cylindrical axial core and a wing of increasing width.

6. A loading-unloading mechanism according to Claim 4,
**characterised in that** the worms (17) of the conveyor revolve above recovery vats (15) which form the base of the enclosure and which are separated from one another by raised edges (16) of triangular section, the axes of which are parallel to the axes of the worms (17) of the conveyor and the points of which are upwardly directed.

7. A loading-unloading mechanism according to Claim 4,
**characterised in that** a group of worms (17) situated on one side of the median plane and a group of worms situated on the other side have inverse pitch and are both driven in the anti-clockwise direction and at the same speed.

8. A loading-unloading mechanism according to Claims 4 and 6, in which beneath recovery vats is provided a horizontal outlet pipe, at right angles to the worms, forming a chute open over the width of the pedestal of its tank,
**characterised in that** the outlet pipe (35) is extended on the outside as far as a decompression chamber (20), open at the base, **and in that** said pipe contains the collecting worm (21) for the evacuation of the extracted treated product towards the chamber, said worm extending over the entire width of the pedestal and until it is a distance D from the decompression chamber.

9. A loading-unloading mechanism according to Claim 4,
**characterised in that** at the outlet of the collecting worm (21), for compressing the evacuated treated product, the unloading device comprises a flap (22) pulled by a counter-weight (24) towards the horizontal outlet pipe (35) at its outlet into the decompression chamber (20).

10. A loading-unloading mechanism according to Claim 8,
**characterised in that** the shaft (25) of the worm (21) comprises blades (26) at its end, in the decompression chamber (20).

11. A loading-unloading mechanism according to Claims 4 and 8,
**characterised in that** an anti-blockage contactor (31) is provided above the horizontal outlet pipe (35) on the side opposite the evacuating worms (17).

12. A loading-unloading mechanism according to Claims 4 and 8,
**characterised in that** each shaft (18) for worms (17) comprises fragmenting blades (30) at its end above the horizontal outlet pipe (35).

13. A loading-unloading mechanism according to Claim 6,
**characterised in that** the treatment fluid is distributed by lines (33), which are located at the top of each raised edge (16) of triangular section and are equipped with a plurality of upwardly directed openings (34).

14. A loading-unloading mechanism according to Claim 13,
**characterised in that** the openings (34) are staggered, from one line to the other, and are irregularly spaced along the lines.

## Patentansprüche

1. Mechanismus zur Beschickung und Entleerung eines als Extraktionsbehälter einer Durchlaufextraktionseinheit verwendbaren geschlossenen Behälters, in den die zu behandelnden festen Produkte oben eingebracht und nach Behandlung durch ein Fluid unten entnommen werden und dessen Abfuhrsystem es gestattet, einen Produktpfropfen in Höhe der Entleerung zu bilden, dadurch gekennzeichnet, daß die Beschickungsvorrichtung ebenfalls ein zusätzliches Mittel umfaßt, das dazu bestimmt ist, das zu behandelnde Produkt zu komprimieren, um vor seiner Einführung in den Behandlungsraum (1) einen Pfropfen zu bilden, und aus einer Schnecke (13) besteht, der eine andere Schnecke (7) zugeordnet ist, deren Achse zur ersten Schnecke senkrecht ist, wobei die vom komprimierten Produkt gebildeten Pfropfen sowohl in Höhe der Beschickungsvorrichtung als auch in Höhe der Entleerungsvorrichtung eine ausreichende Dichtheit besitzen, um im Inneren des Behälters flüssige oder gasförmige Behandlungsfluide zu halten.

2. Beschickungs- und Entleerungsmechanismus nach Anspruch 1, in dem die Schnecke (13) horizontal ist, dadurch gekennzeichnet, daß die andere Schnecke (7), die auf einer rotierenden Welle (8) mit vertikaler Achse montiert ist, die Öffnung (4) zur Produktzufuhr in den Behälter durchquert und in einem Gehäuse (9) aufgenommen ist, in den das die Schnecke (13) enthaltende Rohr (12) mündet.

3. Beschickungs- und Entleerungsmechanismus nach Anspruch 2, dadurch gekennzeichnet, daß die Schnecke (13) sich im Inneren des Rohrs (12) bis zu einem gewissen Abstand (d) vom Gewinde der vertikalen Schnecke (7) erstreckt, wobei der komprimierte Produktpfropfen (36) dieses Rohr auf diesem Abstand einnimmt.

4. Beschickungs- und Entleerungsmechanismus nach Anspruch 1, dessen Entleerungsvorrichtung einen Teppich von parallelen Schnecken umfaßt, die das behandelte Produkt abziehen und es zu einer Abfuhrsammelschnecke bringen, dadurch gekennzeichnet, daß der Schneckenteppich aus Schnecken (17) mit einem leicht konischen Profil besteht, dessen Erweiterung in Richtung auf eine Abfuhrsammelschnecke (21) offen ist.

5. Beschickungs- und Entleerungsmechanismus nach Anspruch 4, dadurch gekennzeichnet, daß das konische Profil der Schnecken (17) des Teppichs durch Vereinigung eines zylindrischen axialen Kerns und eines Flügels mit zunehmender Breite erhalten ist.

6. Beschickungs- und Entleerungsmechanismus nach Anspruch 4, dadurch gekennzeichnet, daß die Schnecken (17) des Teppichs sich über Abfuhrmulden (15) drehen, die den Boden des Behälters bilden und voneinander durch Rippen (16) mit dreieckigem Querschnitt getrennt sind, deren Achsen zu den Achsen der Schnecken (17) des Teppichs parallel sind und deren Spitze nach oben gerichtet ist.

7. Beschickungs- und Entleerungsmechanismus nach Anspruch 4, dadurch gekennzeichnet, daß eine auf einer Seite von der Mittelebene gelegenen Schneckengruppe (17) und eine auf der anderen Seite gelegene Schneckengruppe entgegengesetzte Steigungen haben und im entgegengesetzten Sinn mit derselben Geschwindigkeit angetrieben werden.

8. Beschickungs- und Entleerungsmechanismus nach den Ansprüchen 4 und 6, in dem unter den Abfuhrmulden quer zu den Schnecken ein horizontales Abfuhrrohr vorgesehen ist, das eine offene Rinne auf der Breite des Sockels seines Behälters bildet, dadurch gekennzeichnet, daß das Abfuhrrohr (35) außen bis zu einer nach unten offenen Dekompressionskammer (20) verlängert ist und daß das Rohr die Sammelschnecke (21) für die Abfuhr des abgezogenen behandelten Produkts auf die Kammer zu enthält, wobei sich diese Schnecke über die ganze Breite des Sockels und darüberhinaus bis zu einem Abstand (D) von der Dekompressionskammer erstreckt.

9. Beschickungs- und Entleerungsmechanismus nach Anspruch 4, dadurch gekennzeichnet, daß die Entleerungsvorrichtung am Ausgang der Sammelschnecke (21) zur Komprimierung des abgeführten behandelten Produkts eine Klappe (22) umfaßt, die durch ein Gegengewicht (24) zum horizontalen Abfuhrrohr (35) zu seiner Mündung in die Dekompressionskammer (20) zurückgeholt wird.

10. Beschickungs- und Entleerungsmechanismus nach Anspruch 8, dadurch gekennzeichnet, daß die Welle (25) der Schnecke (21) an ihrem Ende in der Dekompressionskammer (20) Schaufeln (26) trägt.

11. Beschickungs- und Entleerungsmechanismus nach den Ansprüchen 4 und 8, dadurch gekennzeichnet, daß ein Schalter (31) zum Verhindern einer Verstopfung über dem horizontalen Abfuhrrohr (35) auf der den Abzugschnecken (17) entgegengesetzten Seite vorgesehen ist.

12. Beschickungs- und Entleerungsmechanismus nach den Ansprüchen 4 und 8, dadurch gekennzeichnet, daß jede Welle (18) der Schnecken (17) an ihrem Ende über dem horizontalen Abfuhrrohr (35) Zerbröckelungsschaufeln (30) trägt.

13. Beschickungs- und Entleerungsmechanismus nach Anspruch 6, dadurch gekennzeichnet, daß das Behandlungsfluid von Verteilungsrohren (33) abgegeben ist, die am Scheitel jeder Rippe (16) mit dreieckigem Querschnitt angeordnet sind und mit einer Vielzahl von nach oben gerichteten Öffnungen (34) versehen sind.

14. Beschickungs- und Entleerungsmechanismus nach Anspruch 13, dadurch gekennzeichnet, daß die Öffnungen (34) von einem Verteilungsrohr zum anderen versetzt und je nach den Verteilungsrohren in unregelmäßigen Abständen angeordnet sind.
